# EUROPÄISCHE PATENTSCHRIFT

(11) **EP 1 546 837 B1**
(45) Veröffentlichungstag und Bekanntmachung des Hinweises auf die Patenterteilung: **28.02.2007**
(21) Anmeldenummer: 03748098.5
(22) Anmeldetag: 26.09.2003
(51) Int. Cl.: G05G 1/14

(54) **VERSTELLBARE PEDALEINRICHTUNG**
ADJUSTABLE PEDAL DEVICE
DISPOSITIF A PEDALE AJUSTABLE

(30) Priorität: 27.09.2002 DE 10245524; 27.09.2002 DE 10245523; 28.11.2002 DE 10255786
(43) Veröffentlichungstag der Anmeldung: 29.06.2005
(73) Patentinhaber: Continental Teves AG & Co. oHG, 60488 Frankfurt (DE)
(72) Erfinder: JAKOBI, Ralf, 65439 Flörsheim (DE); KRÄMER, Horst, 65462 Ginsheim-Gustavsburg (DE); HABER, Michael, 12685 Berlin (DE); SCHONLAU, Jürgen, 65396 Walluf (DE); KRANLICH, Holger, 61184 Karben (DE); SELLINGER, Thomas, 63073 Offenbach (DE)
(86) Internationale Anmeldenummer: PCT/EP2003/010737
(87) Internationale Veröffentlichungsnummer: WO 2004/031881

(56) Entgegenhaltungen:
- EP-A- 0 918 273
- DE-A- 10 028 591
- US-A1- 2001 047 696
- US-B1- 6 443 028

## Beschreibung

Die Erfindung betrifft eine Pedaleinrichtung für Kraftfahrzeuge mit der verschiedene Fahrzeugkomponenten steuerbar sind. Vielfach ist es erwünscht ein Fahrzeug an unterschiedliche Fahrer leicht anpassen zu können. So gibt es beispielsweise unterschiedliche Einstellungen für Spiegel, die anhand eines Zählwerkes reproduzierbar vorgemerkt werden können. Sobald ein Fahrer den individuell vorbestimmten Zählerstand einstellt, werden die einzelnen Spiegel in die für ihn vorbestimmte Stellung gefahren. Wegen der unterschiedlichen Körperlänge der einzelnen Fahrer ist auch schon vorgeschlagen worden die einzelnen Pedale in ihrer Stellung an den jeweiligen Fahrzeugführer anzupassen. So ist beispielsweise in der EP-OS 918273 ein Pendalwerk beschrieben, bei dem die an einem Träger aufgehängten Pedale zusammen mit dem Träger verschwenkt werden können. Nachteilig bei dem dort beschriebenen Bremspedal ist es, daß der Bremskraftverstärker mit einer Zugbewegung betätigt wird. Bei Verwendung herkömmlicher Bremskraftverstärker ist eine zusätzliche Umlenkung nötig.

Aus der DE-OS 2941 345 ist ein verstellbares Pedalenwerk bekannt. Hierbei werden zwei auf einem Träger angeordnete Pedalhebel gemeinsam mit dem Träger verschwenkt. Gleichzeitig läßt sich der Träger zusammen mit den beiden Pedalen auf einer Graden gegenüber der Trägerbefestigung verschieben. Die sich ergebenden kinematischen Beziehungen sind recht unklar, sodaß gegen den Einsatz dieser Konstruktion in großer Serie Bedenken bestehen. Weiterhin ist ein Stellglied, z.B. Bremsbetätigung zum Steuern der Bremse an dem Träger selbst befestigt und gemeinsam mit den Pedalen verschwenkbar.

Aus der DE-OS 10028591 ist eine Pedaleinrichtung bekannt, bei der ein Stellglied drehbar an dem Pedalhebel angelenkt ist, und um eine dritte Achse drehbar ist. Eine dritte Achse fluchtet mit der Drehachse des Trägers. Obwohl sich hier bei einem Verstellen des Pedalhebels durch Verschwenken des Trägers die Lage der dritten Achse nur geringfügig ändert, verfügt die Pedaleinrichtung über den Nachteil, daß diese Pedaleinrichtung nicht dafür geeignet ist, gleichzeitig mit dem Bremspedal auch noch ein Gaspedal verstellen zu können, weil die kinematischen Verhältnisse an einem Gaspedal nicht mit den kinematischen Verhältnisse an einem Bremspedal übereinstimmen. Das hängt unter anderem damit zusammen, daß durch das Bremspedal eine Druckkraft aufgebracht werden muß während das Gaspedal eine Zugkraft auf den Gaszug ausüben muß.

Aus der US-PS 6324939 ist eine Pedaleinrichtung bekannt, bei der sowohl das Bremspedal als auch das Gaspedal gemeinsam verstellt werden können. Hierzu sind zwei bewegliche Träger vorgesehen, welche eine gemeinsame Verstellung von Gaspedal und Bremspedal bewirken. Der erste Träger ist in axialer Richtung verstellbar. Durch die Verstellung des ersten Trägers wird nicht nur das Bremspedal selbst sondern auch der zweite Träger geschwenkt, an welchem das Gaspedal drehbar aufgehängt ist. Die in der genannten US-Patentschrift beschriebene Konstruktion ist aufwendig. Darüber hinaus sind sowohl der zweite Träger als auch das Bremspedal an dem am ersten Träger aufgehängten Bereich mit Langlöchern versehen so daß mit diesen Maßnahmen mit hohem Aufwand eine Gleitführung für die zuletzt genannten Bauteile erhalten wird.

Aus der gattungsbildenden US 6,443,028 B1 ist eine verstellbare Pedaleinrichtung mit einem Bremspedal und einem, an einer Halterung befestigten, elektronischen Gaspedal bekannt, bei welcher das Bremspedal und die Halterung drehbar an einem Bolzen eines Trägers angeordnet sind. Eine analoge Verstellung der Pedale wird durch einen Führungsstift der Halterung ermöglicht, welcher in einem Langloch eines Halters der Pedaleinrichtung geführt ist. Für eine Verwendung eines Gaspedals mit Gaszug ist diese verstellbare Pedaleinrichtung nicht geeignet.

Der Erfindung liegt daher die Aufgabe zugrunde, eine verstellbare Pedaleinrichtung bereitzustellen, welche mit einfachem Aufbau gleichzeitig für ein Gaspedal mit Gaszug und für ein elektronisches Gaspedal (E-Gas) Verwendung finden kann und dabei eine analoge Verstellung der Pedale gewährleistet ist.

Die Aufgabe wird gelöst durch die Merkmale des kennzeichnenden Teils des Anspruch 1.

Ist das Stellglied nur axial verschiebbar angeordnet, so wird bei der erfindungsgemäßen Pedaleinrichtung beim Verschwenken des Trägers auch die Lage des Angriffspunktes am Bremspedal verschoben und zwar umso mehr je weiter der Angriffspunkt von der ersten Achse E entfernt ist und je näher er sich bei der zweiten Achse B befindet. Die Verschiebung ist weiterhin umso größer, je größer der Schwenkwinkel ist. Da das Bremspedal drehbar aufgehängt ist, ändert sich bei nur axial verschiebbarem Stellglied die Lage des Angriffspunktes auch beim Betätigen des Bremspedals.

Um auch größere Verschiebungen des Angriffspunktes und damit größere Verstellungen der Pedale zu ermöglichen empfiehlt sich eine vorteilhafte Weiterbildung der Erfindung wonach ein Stellglied über ein Kugel- Gelenk an der zu verstellenden Einrichtung angreift, welche vorzugsweise als Bremskraftverstärker oder Hauptzylinder ausgebildet ist.

Bei einer weiterhin bevorzugten Variante wird über das Bremspedal eine Druckkraft auf ein Stellglied ausgeübt, wohingegen über das Gaspedal eine Zugkraft auf einen Gaszug ausgeübt wird. Dabei sind die beiden Pedalplatten um einen beträchtlichen, etwa gleichgroßen Betrag in ihrer Ausgangslage verstellbar, und es ergibt sich ein verhältnismäßig einfacher Aufbau. Eine Ausführungsform ermöglicht sowohl eine Betätigung einer Drossel für die Gaszufuhr wie auch eine Betätigung eines Bremssystems.

Indem zwischen dem ersten Pedalhebel für die Bremsbetätigung und einer Kolbenstange an einem Bremskraftverstärker oder einem Hauptbremszylinder ein gesonderter Lenker und ein Schwenkhebel vorgesehen ist, wobei der Lenker gelenkig an dem Pedalhebel und der Kolbenstange angeordnet ist, wird ein größeren Freiheitsgrad in dem Verstellbereich ermöglicht, welcher infolge der fahrzeugfesten Anordnung von Bremskraftverstärker und Hauptbremszylinder bei dem Stand der Technik nicht erreicht wird.

Die Befestigung der Pedaleinrichtung erfolgt vorteilhafterweise, indem der Halter an einer sogenannten fahrzeugfesten Spritzwand befestigt ist. Es kann alternativ aber auch ein gesonderter Querträger vorgesehen sein, an dem die Pedaleinrichtung angeordnet wird.

Ein weiterer Freiheitsgrad in der Art der Anordnung der Pedaleinrichtung wird erschlossen, indem die Verlängerung derart mit einer Auskragung - welche die Lenksäule umgreift - versehen ist, so daß die Lenksäule wahlweise rechts oder links von der Pedaleinrichtung anordbar ist.

Ganz grundsätzlich ermöglicht die Erfindung eine manuelle Verstellung der Pedaleinrichtung. In vorteilhafter Weiterbildung der Erfindung ermöglicht die Erfindung jedoch auch einen Motorantrieb, der an dem Träger angreift und diesen um einen vorgegebenen Betrag verschwenkt. Dabei weist der Motorantrieb vorzugsweise einen, mit einem Getriebe versehenen Elektromotor auf, der an dem Halter drehbar verankert ist.

Durch eine motorische Verstellmöglichkeit wird es auch ermöglicht, bestimmte Einstellungen, die einem bestimmten Fahrer zugeordnet sind, in einem Speicher zu speichern. Auf diese Weise können mehrere Fahrer des gleichen Fahrzeugs ihre eigenen Einstellungswerte abrufen, wobei die Reproduktion der individuellen Einstellungen der Pedaleinrichtung automatisch geschieht.

Theoretische Überlegungen, die durch Versuche verifiziert wurden, führen zu folgender vorteilhaften Variante. Eine Vorrichtung, bei der die erste Achse E auf dem Schnittpunkt der Mittelsenkrechten zweier Strecken liegt, wobei die erste Strecke durch die Verschiebung der zweiten Achse B während der Verstellung und die zweite Strecke durch die Verschiebung der vierten Achse D während der Verstellung definiert ist, ermöglicht eine Anordnung der Abstände der einzelnen Achsen derart, daß bei einer Verschwenkung des Trägers sowohl die Pedalplatte des Bremspedals als auch des Gaspedals um den gleichen Betrag innerhalb des Fahrgastraumes verschoben wird. Dadurch erfolgt eine Synchronisation der Verstellbewegungen, und es ist sichergestellt, daß die Pedalplatten in jeder Verstellposition den gleichen Abstand zueinander aufweisen.

In Weiterbildung der Erfindung kann in dem Träger zusätzlich Brems- und Gaspedal auch noch ein Kupplungspedal drehbar gelagert sein. Dabei empfiehlt sich für eine gleichzeitige Verstellung des Kupplungspedales, daß für dessen Lagerung in dem Träger eine gegenüber der Drehachse (B) des Bremspedals radial versetzte Drehachse vorgesehen ist. Ein vorzugsweise hydraulischer Geberzylinder für die Kupplung greift dann mit seinen Enden sowohl an dem Träger als auch an dem Pedalhebel der Kupplung an. Entsprechendes gilt für eine Feder, die den Pedalhebel der Kupplung in eine unbetätigte Ruhelage zurückstellen kann.

Eine weitere vorteilhafte Ausgestaltung der Erfindung betrifft eine Pedaleinrichtung mit sogenanntem E-Gas (elektronisches Gaspedal) wobei ein Fahrerwunsch durch einen Sensor ermittelt wird, beispielsweise durch ein Drehpotentiometer. Im Falle einer Anbindung des Fahrpedals bzw. des Sensors direkt an den Hebel des Brackets, kann eine analoge Verstellung des Gaspedals zum Bremspedal nicht mehr erreicht werden. Die Betätigungsplatte des Gaspedals würde sich zwangsläufig um den Drehpunkt des Trägers bewegen.

Gemäß vorteilhafter Ausgestaltung der Erfindung wird eine Verstellung des E-Gaspedals analog zum Bremspedal ermöglicht. Dabei wird das E-Gaspedal über eine geeignete Verbindung zur Spritzwand oder zum festen Teil des Pedalbockes an einem Ende festgehalten.

Weitere diesbezügliche Ausgestaltungen der Erfindung ergeben sich aus Unteransprüchen.

Die Erfindung wird nachfolgend anhand von Ausführungsbeispielen beschrieben. In der Zeichnung zeigt:
Fig. 1 in symbolischer Darstellung eine Vorderansicht einer Ausführungsform mit parallel zueinander versetzten, einzelnen Schwenkachsen, wobei die Lenksäule links von der Pedaleinheit angeordnet ist,
Fig.2 in symbolischer Darstellung eine weitere Ausführungsform mit parallel zueinander versetzten Schwenkachsen, wobei die Lenksäule rechts von der Pedaleinheit angeordnet ist,
Fig. 3 in symbolischer Darstellung eine Seitenansicht der Ausführungsbeispiele gemäß Fig. 1 und Fig. 2, wobei der Pedalhebel für das Bremspedal in zwei verschiedenen Ausgangsstellungen dargestellt ist,
Fig. 4 in symbolischer Darstellung eine Variante der Erfindung mit E-Gas mit parallel zueinander versetzten einzelnen Schwenkachsen,
Fig.5 in symbolischer Darstellung eine Seitenansicht der Ausführungsform nach Fig. 4, wobei der Pedalhebel für das Gaspedal in zwei verschiedenen Ausgangsstellungen dargestellt ist, und
Fig. 6 eine Prinzipdarstellung einer Variante, bei der zwischen erstem Pedalhebel und einer Kolbenstange zur Betätigung eines Bremskraftverstärkers ein gesonderter Lenker vorgesehen ist, welcher einen größeren Freiheitsgrad im Verstellbereich der Pedaleinrichtung ermöglicht.

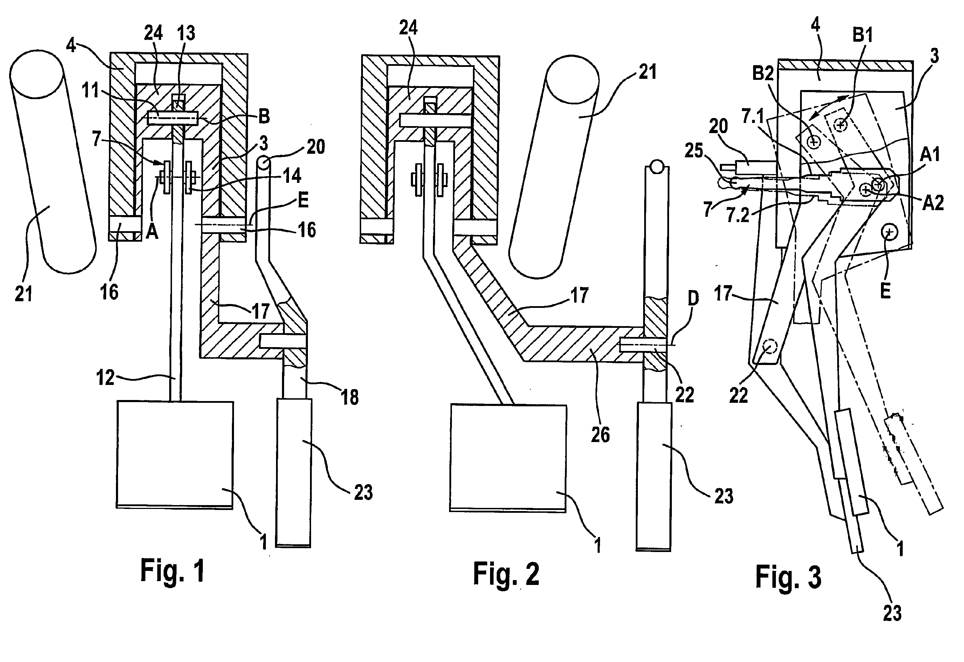

In Fig. 1 ist ein Halter 4 angedeutet, der aus mehreren Blechen zusammengesetzt sein kann oder als ein Spritzteil ausgeführt sein kann, welches aus Aluminium oder Kunststoff besteht. Der Halter 4 kann mit seinem die beiden Halterschenkel verbindenden Bodenstück an einer Spritzwand oder einen Querträger eines nicht dargestellten Fahrzeugs befestigt sein. Ein Träger 3 ist in dem Halter 4 drehbar gelagert. Die Drehung kann durch einen an dem Träger 3 angreifenden Motor geschehen. Einzelheiten hierzu lassen sich insbesondere der DE 100 28 591 A1 entnehmen deren diesbezüglicher Offenbarungsgehalt ausdrücklich mit einbezogen wird.

Wie in Fig. 1 angedeutet, kann der Halter 4 aus zwei parallelen, senkrecht von der Spritzwand abstehenden Blechen bestehen.

Wie aus Fig. 1 und 2 ersichtlich, besteht der Träger 3 im wesentlichen aus zwei miteinander starr verbundenen parallelen Blechen, die wiederum parallel zu den beiden Blechen des Halters 4 ausgerichtet sind. Der Träger 3 ist schwenkbar in dem Halter 4 gelagert, wobei der Träger 3 gegenüber dem Halter 4 um die erste Achse E schwenkbar ist.

Die Drehung geschieht dabei über zwei miteinander fluchtende Lagerstifte 16. Greift also ein Motor an dem oberen Trägerende 24 des Trägers 3 an, so wird der Träger 3 um eine Schwenkachse E gedreht, die die Mittellinie für die Lagerstifte 16 bildet. Um bei einer verwendeten Auskragung 26, (wie in Figur 2 dargestellt) für das Lager D des Gashebels 18 eine größere Stabilität zu erhalten kann diese Auskragung ebenfalls durch einen weiteren Lagerstift (16) auf der ersten Achse E über einen in Fig. 2 nicht dargestellten, mt der Auskragung verbundenen Stützarm drehbar gelagert werden.

Wie aus Fig. 1 bis 3 hervorgeht, ist das obere Ende 13 eines Pedalhebels 12 mittels eines Querbolzens 11 in dem Träger 3 drehbar gelagert. Die Drehung erfolgte dabei um eine zweite Achse B, wie auch aus Fig.3 ersichtlich ist. Wie aus Fig. 1 und 3 zu ersehen, stützt sich der Pedalhebel 12 weiterhin noch an dem freien Ende einer Betätigungstange 7 eines nicht dargestellten Brems Kraft-Verstärkers in Höhe der dritten Achse A ab. Im Ausgangszustand ist somit Winkellage des Pedalhebels 12 durch die Lage der beiden Drehachsen B, und A zueinander vorgegeben.

Wird nun beispielsweise der Träger 3 in Fig. 3 und damit die Achse B in Fig. B entgegen den Uhrzeigersinn nach links verschwenkt, so schwenkt auch die Pedalplatte 1 um die Achse A entgegen dem Uhrzeigersinn nach rechts und damit in Richtung zu den Füßen des Fahrers hin. Dadurch, daß die Schwenkachse B sehr weit oben liegt, der Schwenkhebel 12 relativ lang ist legt die Pedalplatte 1 bei einem kleinen Winkel schon einen recht großen Weg zurück.

Aus Fig. 3 ist ersichtlich, wie bei einer Drehung des Trägers 3 um die erste Achse E die Lage der zweiten Achse B von B1 nach B2 aber insbesondere auch die Lage der dritten Achse A von A1 nach A2 verschoben wird. Man erkennt aus Fig. 3, daß das Stellglied 7 je nach Drehlage des Trägers 3 jeweils eine andere Winkelstellung einnimmt. Mit anderen Worten macht man das Stellglied nur in seiner Längsrichtung verschiebbar so hat das Verschwenken des Trägers und damit des Pedalhebels sowie das Betätigen des Pedalhebels durch Fußkraft einen Einfluß auf die Lage des Angriffspunkts A der Betätigungsstange 7 an dem Pedalhebel 12 (der auf der Achse A1 bleibt). Um hier eine Beschädigung des Stellgliedes 7 zu vermeiden ist es bei nicht verschwenkbaren Stellglied notwendig ein gekrümmtes Langloch vorzusehen, welches die Punkte A1 und A2 umfaßt. In Weiterbildung der Erfindung ist aus Fig. 3 eine andere Lösung ersichtlich. Hierbei ist das Stellglied 7 um einen Kugelkopf 25 in dem nicht dargestellten Bremskraftverstärker schwenkbar. Dabei sollen A1 und A2 möglichst auf einem Kreis um den Kugelkopf 25 liegen.

Im Vergleich mit der DE 100 28 591 A1 unterscheidet sich der Gegenstand der vorliegenden Anmeldung noch durch einen Vorsprung 17, der am Träger 3 nach unten vorsteht. An diesen Vorsprung 17 ist mittels eines Drehstiftes 22 ein Gashebel 18 drehbar gelagert. Vergleichbar mit der Anlage am Punkt A von dem Pedalhebel 12 wird das obere Ende des Gashebels 18 durch einen Seilzug 20 festgehalten, so daß bei Ausübung einer Druckkraft auf die Pedal-Platte 23 der Gashebel um den Drehstift 22 und damit die Mittelachse D des Drehstiftes 22 gedreht wird und hierdurch über den Seilzug 20 eine nicht dargestellte Drossel-Klappe geöffnet wird. Man erkennt, daß bei einem Verschwenken des Trägers 3 wie in Fig. 3 gezeigt das obere Ende des Gashebels 18 durch den Seilzug 20 festgehalten wird, so daß der Lagestift 22 zusammen mit dem Vorsprung nach vorn verschenkt wird, wobei der Gashebel 18 sich wegen der Fesselung des oberen Endes des Gashebels 18 durch den Seilzug um den Drehstift 22 dreht. Wie weiter oben schon beschriebenen lassen sich die einzelnen Achsen derart anordnen, daß bei einem Verschwenken des Trägers 3 die Pedalplatte 1 und die Pedal-Platte 23 um die gleichen Beträge nach vorn verschwenkt werden.

Die Erfindung beschränkt sich nicht auf die in den Figuren dargestellte ins einzelne gehende Ausgestaltung der einzelnen Schaltungsbauteile. So kann beispielsweise der Träger 3 und auch der Halter 4 jeweils durch ein einzelnes Blech dargestellt sein.

Bei der Ausführungsform nach Fig. 3 kann auf die Verwendung einer Gabel 14 mit Haltestift am offenen Ende der Betätigungstange 7 verzichtet werden, wenn sichergestellt ist, dass die Betätigungstange 7 mit ihrem offenen Ende in Höhe der Drehachse A beispielsweise an der äußeren Kontur des Pedalhebels angreift. Der genannte Angriffspunkt A der Betätigungsstange 7 an dem Pedalhebel 12 ist auch nicht als geometrischer einzelner Punkt zu verstehen.

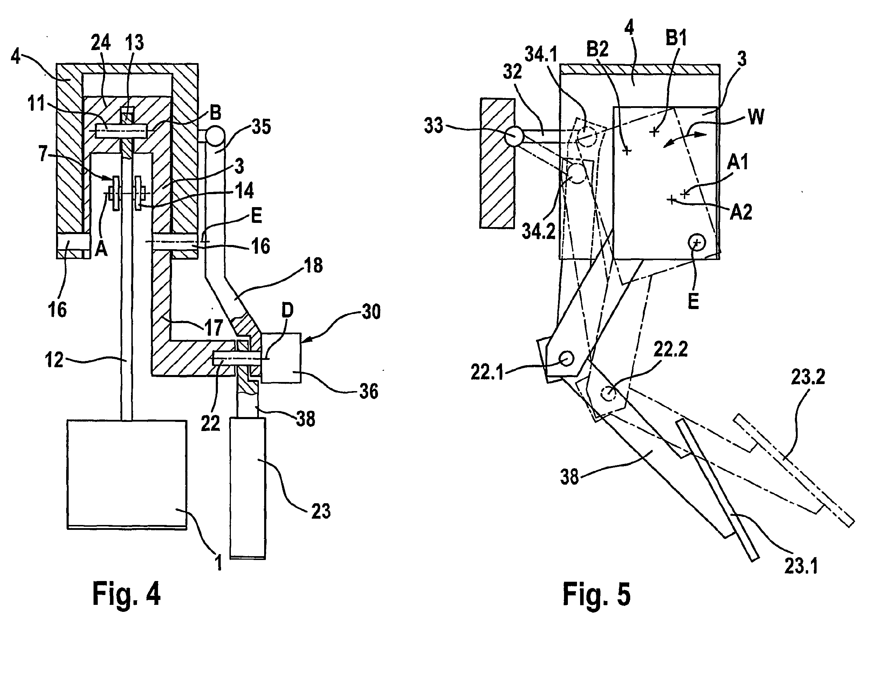

Fig. 4 bezieht sich auf eine Variante der Erfindung mit E-Gas, und stimmt in weiten Teilen mit der Variante nach Fig. 1 bis 3 überein, so daß auf die diesbezüglichen Beschreibungspassagen Bezug genommen wird, um unnötige Wiederholungen zu vermeiden, und nachstehend lediglich Unterschiede näher erläutert werden.

Bei der Variante mit Messwertaufnehmer für einen E-Gas-Geber 30 gemäß Fig. 4 und 5 steht kein Gaszug wie bei den Fig. 1- 3 zur Verfügung, welcher das Gaspedal 18 beim Verstellen des Trägers 3 an seinem oberen Ende festhalten könnte. Um aber den Gashebels 18 beim Verschwenken des Trägers 3 um die Achse E dennoch um die Achse D schwenken zu können wird der Seilzug durch eine Fesselung in Gestalt eines Schwenkhebel 32 ersetzt. Dieser Schwenkhebel 32 kann beispielsweise durch Gelenke 33,34 mit dem oberen Ende des Gashebels 18 beziehungsweise dem Halter 4 oder einen anderen gegenüber dem Fahrzeug festen Punkt verbunden sein. Eine andere Möglichkeit besteht darin, den Schwenkhebel 32 durch ein Seil oder Kabel zu ersetzen.

Wird nun der Träger 3 um einen gewissen Winkel W (siehe Fig. 5) um die Achse E geschwenkt, so wandert der Drehstift 22.1 in die Lage 22.2. Dementsprechend kommt das Gelenk 34.1 in die Lage 34.2 und die Pedalplatte 23.1 in die Lage 23.2. Damit ist sichergestellt, daß die Verstellung der Pedalplatte 23 auch dann möglich ist, wenn kein Gaszug am oberen Ende 35 des Gaspedals 18 angreift.

Bei der Lösung gemäß Fig. 1-3 ist der Gashebel 18 einstückig und damit in sich starr. Der Pedalhebel 18 ist bei der Variante nach Fig. 4-5 durch den Schwenkhebel 32 und den Lagerstift 22 an zwei Punkten festgelegt. Eine E-Gas-Betätigung bei gleichzeitiger Verstellmöglichkeit wird wie folgt ermöglicht. Der Pedalhebel 18 für das Gas ist mit einem Ansatz 38 versehen der mittels des Lagerstiftes 22 gegenüber dem Pedalbebel 18 drehbar ist. Dabei ist das Gehäuse 36 des Gebers 30 mit dem Pedalhebel 18 versehen und ein bewegbares Stellglied des Gebers greift an dem Ansatz 38 an. Eine umgekehrte Konstellation ist ebenfalls möglich. Wird nun der Ansatz 38 gegenüber dem Gashebel 18 bewegt, ändert sich auch die Lage des Stellgliedes gegenüber dem Gehäuse 36, so daß eine von dem Fahrer gewünschte Motordrehzahl durch ein entsprechendes Ausgangssignal von dem Geber abgegeben werden kann. Der Geber ist weiterhin noch mit einer Feder versehen, welche den Ansatz 38 beim Nachlassen der auf die Pedalplatte 23 ausgeübten Kraft in seine Ausgangslage zurückstellt, die durch einen Anschlag definiert ist, und gleichzeitig für das gewünschte Pedalgefühl beim Betätigen der Pedalplatte sorgt.

Bei der Variante nach Fig. 4-5 wird das der Pedalhebel 18 an der Aufhängung im Punkt D geteilt, so daß die geteilten Hebelteile unterschiedliche Verschwenkungen erfahren. Der obere Teil des Gaspedals 18 wird mittels eines gelenkig angeordneten Schwenkhebels 32 zwangsläufig um Drehpunkte E im Pedalbock (Halter 4) bewegt. Dabei wird während der Verschwenkung eine relative Bewegung des Hebels 38 hierzu im Punkt D, 22 ermöglicht. Die Sensierung kann zwischen dem oberen und unteren Teil des Gaspedals (18, 38) erfolgen. Dies hat gegenüber der Sensierung zum Gaspedalträger den Vorteil, das nicht nach jeder Verstellbewegung der Pedaleinrichtung ein neuer Nullpunkt (Referenzpunkt) initialisiert werden - muss.

Zusammenfassend verfügen alle Varianten über folgende Vorteile. Es wird eine fahrerbezogene Einstellung der Betätigungspedale für große und kleine Fahrer ermöglicht. Neben der Verbesserung der ergonomischen Bedingungen (Erreichbarkeit der Instrumente und Schalter) und des Komforts wird vor allem eine Verbesserung der sicherheitstechnischen Bedingungen erreicht. Ein zu kurzer Abstand des Fahrers zum Lenkrad und damit zum Airbag wird vermieden. Typische Verletzungen durch den Airbag können damit minimiert werden. Die Verstellung des Gaspedals analog zum Bremsbedal (gleicher Verstellweg, gleiche Verstellrichtung) wird ermöglicht.
Zusammenfassend läßt sich die eine gleichzeitige Verstellung von Bremspedal und Gaspedal ermöglichende Erfindung kurz wie folgt beschreiben.

Verstellbare Pedalmodule ermöglichen eine fahrerbezogene Einstellung der Betätigungspedale für große und kleine Fahrer. Neben der Verbesserung der ergonomischen Bedingungen (Erreichbarkeit der Instrumente und Schalter) und des Komforts wird vor allem eine Verbesserung der sicherheitstechnischen Bedingungen erreicht. Ein zu kurzer Abstand des Fahrers zum Lenkrad und damit zu einem Airbag wird vermieden. Typische Verletzungen durch den Airbag können damit minimiert werden.

Bei der Entwicklung eines verstellbaren Pedalmodules (APM = adjustable pedal module) ist es vorteilhaft, für alle Pedale den gleichen Verstellweg darzustellen. Durch die - bezogen auf das Bremspedal - unterschiedliche Kinematik des Gaspedals ist dies mit den in der DE 100 28 591 A1 beschriebenen Mitteln jedoch nicht möglich.

In der US Patent Nr. 6,324,939 B1 von Cicotte ist ein Mechanismus zum gleichzeitigen Verstellen von Gaspedal und Bremspedal beschrieben. Der bei diesem Patent verwendete Verstellmechanismus des Bremspedals erfolgt über eine Gleitschiene. Sowohl der Drehpunkt das Bremspedal als auch ein für die Verstellung des Gaspedals notwendiger Hebel werden dabei in Langlöchern verschoben. Dieser Mechanismus birgt die Gefahr des Verklemmens in sich und ist aufwendig.

Mit der vorliegenden Anmeldung wird dagegen eine Lösung beschrieben, die eine Verstellung des Gaspedals analog zum Bremspedal ermöglicht. Generell erfolgt die Verstellung des Trägers rotatorisch. Auf einen separaten Hebel gemäß US 6,324,939 B1 wird dagegen verzichtet.

Im Prinzip besteht die Weiterbildung der Erfindung aus einem Bracket (Träger 3), das in einem Halter drehbar gelagert ist. Neben der in der DE-OS 10028591 beschriebenen Funktion der Pedalverstellung durch einen Motor ist am Träger 3 eine zusätzliche Verlängerung (Vorsprungs 17) angebracht, die das Gaspedal 18 trägt. Die Lagerung des Gaspedals erfolgt auf einer separaten vierten Achse D. Bei Betätigung des Pedals 18 findet eine Drehbewegung um diesen Punkt D statt, der Gaszug 20 wird vom oberen Ende des Pedals 18 betätigt. Je nach Lage der Lenksäule 21 sind verschiedene Ausführungsformen des Trägers incl. integriertem Hebel 17 möglich (siehe Fig. 1 und 2). Die Ausgestaltung dieses angeformten Hebels muß auf die freie Länge des vom Gaspedal betätigten Gaszuges abgestimmt sein. Beide Pedale werden über die gleiche Drehachse E verstellt. Die unterschiedliche Kinematik der Pedale ist in Fig. 3 verdeutlicht.

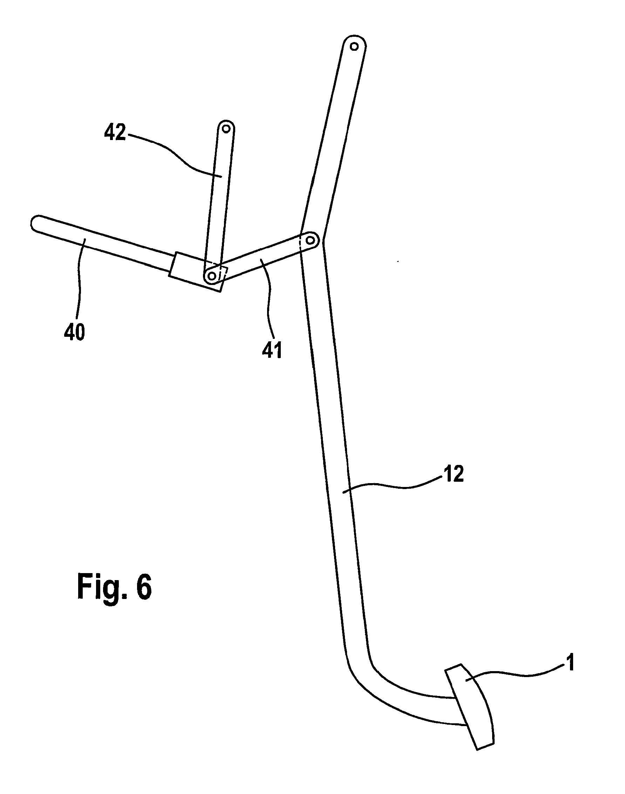

Fig. 6 betrifft eine Verbesserung, welche in Verbindung mit sämtlichen Ausführungsbeispielen angewendet werden kann. Indem zwischen dem ersten Pedalhebel 12 für die Bremsbetätigung und einer Kolbenstange 40 an einem Bremskraftverstärker oder einem Hauptbremszylinder ein gesonderter Lenker 41 und ein Schwenkhebel 42 vorgesehen ist, welcher gelenkig an dem Pedalhebel 12 und der Kolbenstange 40 angeordnet ist, wird ein größeren Freiheitsgrad in dem Verstellbereich ermöglicht, welcher infolge einer fahrzeugfesten Anordnung von Bremskraftverstärker und Hauptbremszylinder bei dem Stand der Technik nicht erreicht wird.

Die Erfindung ermöglicht die Verstellung des Gaspedals analog zum Bremsbedal (gleicher Verstellweg, gleiche Verstellrichtung), ohne einen zusätzlichen separaten Hebel nach US Patent Nr. 6,324,939 B1 verwenden zu müssen. Eine rein rotatorische Bewegung - ohne Gleitführung - erlaubt bei geringem Aufwand eine präzise Führung und eine klapperfreie, sichere Funktion.

## Patentansprüche

1. Verstellbare Pedaleinrichtung für ein Kraftfahrzeug, wobei ein Halter (4) an einem Fahrzeugkörper fixiert ist, wobei in dem Halter (4) ein Träger (3) um eine erste Achse (E) drehbar angeordnet ist, wobei mindestens ein erster Pedalhebel (12) an dem Träger (3) um eine zweite Achse (B) drehbar angeordnet ist, der (erste Pedalhebel (12)) bei seiner Betätigung durch Drehen um die zweite Achse (B) über einen Angriffspunkt (A) auf ein Stellglied (7) einwirkt, so dass sich der Angriffspunkt (A) um einen Verschiebeweg verschiebt, und wobei ein zweiter Pedalhebel (18) in dem Träger (3) drehbar gelagert ist, **dadurch gekennzeichnet, dass** der zweite Pedalhebel (18) um eine vierte Achse (D) drehbar an einer Verlängerung (17) des Trägers (3) gelagert ist.

2. Pedaleinrichtung nach Anspruch 1, **dadurch gekennzeichnet, daß** das Stellglied (7) mit seinem ersten Ende (25) um eine dritte Achse (A) drehbar in dem Pedalhebel (12) gelagert ist und daß ein zweites Ende des Stellgliedes (7) schwenkbar an einem Bremskraftverstärker oder einem Hauptzylinder, gelagert ist.

3. Pedaleinrichtung nach Anspruch 1, **dadurch gekennzeichnet, daß** die zweite Achse (B) und die vierte Achse (D) zueinander versetzt angeordnet sind, und daß die vierte Achse (D) unter-halb der ersten Achse (E) angeordnet ist und daß die erste Achse (E) unterhalb der zweiten Achse B) angeordnet ist.

4. Pedaleinrichtung nach Anspruch 3, **dadurch gekennzeichnet, daß** der erste Pedalhebel (12) zur Betätigung eines Bremskraftverstärkers oder eines Hauptzylinders eines Bremssystems dient, und daß der zweite Pedalhebel (18) zur Motordrehzahlsteuerung dient, wobei die unteren freien Enden der Pedalhebel (12,18) mit Pedalplatten (1, 23) versehen sind.

5. Pedaleinrichtung nach Anspruch 4, **dadurch gekennzeichnet, daß** zwischen dem ersten Pedalhebel (12) für die Bremsbetätigung und einer Kolbenstange (40) ein gesonderter Lenker (41) sowie eine Schwenkhebel (42) vorgesehen sind, wobei der Lenker (41) gelenkig an dem Pedalhebel (18) und der Kolbenstange (40) angeordnet ist, um einen größeren Freiheitsgrad in dem Verstellbereich zu ermöglichen.

6. Pedaleinrichtung nach einem der Ansprüche 1 bis 5, **dadurch gekennzeichnet, dass** der Halter (4) an einer Spritzwand (5) des Fahrzeugs befestigt ist.

7. Pedaleinrichtung nach Anspruch 1, **dadurch gekennzeichnet, dass** die Verlängerung (17) wahlweise mit einer die Lenksäule (21) umgreifenden Auskragung (26) versehen ist, so daß die Lenksäule (21) wahlweise rechts oder links von der Pedaleinrichtung anordbar ist.

8. Pedaleinrichtung nach einem der Ansprüche 1 bis 7, **dadurch gekennzeichnet, daß** der Träger (3) mittels eines elektrischen Antriebs verschwenkt wird, wobei als Antrieb vorzugsweise ein mit einem Getriebe versehener Elektromotor vorgesehen ist, welcher an dem Halter (4) drehbar verankert ist.

9. Pedaleinrichtung nach Anspruch 1, **dadurch gekennzeichnet, daß** die erste Achse (E) auf dem Schnittpunkt der Mittelsenkrechten zweier Strecken liegt, wobei die erste Strecke durch die Verschiebung der zweiten Achse (B) während der Verstellung und die zweite Strecke durch die Verschiebung der vierten Achse (D) während der Verstellung gegeben ist.

10. Pedaleinrichtung nach Anspruch 1, **dadurch gekennzeichnet**, das in dem Träger (3) zusätzlich noch ein Pedalhebel einer Kupplungsvorrichtung drehbar gelagert ist.

11. Pedaleinrichtung nach Anspruch 4, **dadurch gekennzeichnet, daß** ein zweites Ende (35) des zweiten Pedalhebels (18) zur Motordrehzahlsteuerung an einem Gaszug (20) angreift.

12. Pedaleinrichtung nach einem oder mehreren der vorhergehenden Ansprüche 1-11, wobei der erste Pedalhebel (12) zur Betätigung des Verstärkers oder Hauptzylinders eines Bremssystems dient, und der zweite Pedalhebel (18) zur Motordrehzahlsteuerung dient, und wobei die unteren freien Enden der Pedalhebel (12,18) mit Pedalplatten (1, 23) versehen sind, **dadurch gekennzeichnet, daß** ein freies, zweites Ende (35) des zweiten Pedalhebels (18) gegenüber dem Halter (4) gefesselt ist, daß der zweite Pedalhebel (18) mit einem unteren Pedalansatz (38) versehen ist, welcher zur Motordrehzahlsteuerung drehbar an dem zweiten Pedalhebel (18) angelenkt ist, wobei die Lagerstelle (22) in dem Bereich zwischen der vierten Achse (D) und der Pedalplatte (23) des Gaspedals angeordnet ist, und wobei ein Meßwert-Aufnehmer zur Erfassung einer Schwenkbewegung zwischen unterem Pedalansatz (38) und zweitem Pedalhebel (18) wirksam ist.

13. Pedaleinrichtung nach Anspruch 12, **dadurch gekennzeichnet, daß** der Messwert-Aufnehmer als E-Gas-Geber (30) ausgebildet ist, welcher einerseits mit einem Gehäuse (36) ortsfest an dem zweiten Pedalhebel (18) angeordnet ist, und wobei ein bewegbares Stellglied des E-Gas-Gebers (30) an dem unteren Pedalansatz (38) angreift, oder umgekehrt.

14. Pedaleinrichtung nach Anspruch 12, **dadurch gekennzeichnet, daß** eine Drehachse des Pedalansatzes (38) mit der vierten Achse (D) fluchtet.

15. Pedaleinrichtung nach Anspruch 12, **dadurch gekennzeichnet, daß** das zweite Ende (35) des zweiten Pedalhebels (18) in Relation zu dem Halter (4) derart gefesselt ist, daß es gegenüber einem bestimmten Befestigungspunkt am Halter (4) um einen vorgegebenen maximalen Winkel verschwenkbar ist.

16. Pedaleinrichtung nach Anspruch 15, **dadurch gekennzeichnet, daß** das zweite Ende (35) gegenüber dem Halter (4) mittels eines Schwenkhebel (32) oder eines Seiles gefesselt ist.

17. Pedaleinrichtung nach Anspruch 12, **dadurch gekennzeichnet, daß** ein Anschlag vorgesehen ist, welcher eine Drehbewegung des Pedalansatzes (38) in Relation zu dem zweiten Pedalhebel (18) begrenzt.

18. Pedaleinrichtung nach Anspruch 17, **dadurch gekennzeichnet, daß** eine Feder vorgesehen ist, welche den Pedalansatz (38) gegenüber dem zweiten Pedalhebel (18) in Richtung zum Anschlag hin vorspannt.

19. Pedaleinrichtung nach Anspruch 18, **dadurch gekennzeichnet, daß** die Feder in das Gehäuse (36) des E-Gas-Gebers (30) integriert ist.

## Claims

1. An adjustable pedal device for a motor vehicle, with a holder (4) being fixed to a vehicle body, with a mounting support (3) in the holder (4) being pivoted about a first axis (E), with at least one first pedal lever (12) at the mounting support (3) being pivoted about a second axis (B), with the first pedal lever (12), when actuated, acting upon a control member (7) by rotating about the second axis (B) by way of a point of application (A) so that the point of application (A) displaces by a displacement travel, and with a second pedal lever (18) being pivoted in the mounting support (3),
**characterized in that** the second pedal lever (18) is mounted at an extension (17) of the mounting support (3) so as to be rotatable about a fourth axis (D).

2. The pedal device as claimed in claim 1,
**characterized in that** the control member (7) with its first end (25) is mounted in the pedal lever (12) so as to be rotatable about a third axis (A), and **in that** a second end of the control member (7) is tiltably mounted on a brake booster or a master cylinder.

3. The pedal device as claimed in claim 1,
**characterized in that** the second axis (B) and the fourth axis (D) are offset in relation to each other, and **in that** the fourth axis (D) is arranged below the first axis (E), and **in that** the first axis (E) is arranged below the second axis (B).

4. The pedal device as claimed in claim 3,
**characterized in that** the first pedal lever (12) is used for the actuation of a brake booster or a master cylinder of a brake system, and **in that** the second pedal lever (18) serves for the engine speed control, with the lower free ends of the pedal levers (12, 18) being furnished with pedal plates (1, 23).

5. The pedal device as claimed in claim 4,
**characterized in that** a separate guide rod (41) and a swivelling lever (42) are provided between the first pedal lever (12) for the brake application and a piston rod (40), with said guide rod (41) being articulated at the pedal lever (18) and the piston rod (40) in order to allow a higher degree of freedom in the range of adjustability.

6. The pedal device as claimed in any one of claims 1 to 5,
**characterized in that** the holder (4) is fastened to a splashboard (5) of the vehicle.

7. The pedal device as claimed in claim 1,
**characterized in that** the protrusion (17) is optionally provided with a projection (26) that encompasses the steering column (21) in such a fashion that the steering column (21) can be arranged optionally on the right or on the left of the pedal device.

8. The pedal device as claimed in any one of claims 1 to 7,
**characterized in that** the mounting support (3) is swivelled by means of an electric drive, said drive being preferably configured as an electric motor equipped with a gear and being rotatably anchored at the holder (4).

9. The pedal device as claimed in claim 1,
**characterized in that** the first axis (E) lies on the point of intersection of the mid-verticals of two distances, with the first distance being defined by the displacement of the second axis (B) during the adjustment and the second distance being defined by the displacement of the fourth axis (D) during the adjustment.

10. The pedal device as claimed in claim 1,
**characterized in that** a pedal lever of a clutch device is additionally pivoted in the mounting support (3).

11. The pedal device as claimed in claim 4,
**characterized in that** a second end (35) of the second pedal lever (18) acts on a carburettor control (20) for the engine speed control.

12. The pedal device as claimed in any one or more of the preceding claims 1 to 11, with the first pedal lever (12) being used for the actuation of the booster or master cylinder of a brake system, and the second pedal lever (18) being used for the engine speed control, and with the lower free ends of the pedal lever (12, 18) being furnished with pedal plates (1, 23),
**characterized in that** a free, second end (35) of the second pedal lever (18) is captivated relative to the holder (4), and **in that** the second pedal lever (18) is furnished with a lower pedal attachment (38) that is rotatably articulated at the second pedal lever (18) for engine speed control, with the point of support (22) being arranged in the area between the fourth axis (D) and the pedal plate (23) of the accelerator pedal, and with a transducer being active for detecting a swivelling movement between the lower pedal attachment (38) and the second pedal lever (18).

13. The pedal device as claimed in claim 12,
**characterized in that** the transducer is designed as a generator (30) of an electronically controlled acceleration device whose housing (36) is stationarily arranged at the second pedal lever (18) on the one hand, and with a movable control member of the generator (30) of an electronically controlled acceleration device acting on the lower pedal attachment (38), or vice-versa.

14. The pedal device as claimed in claim 12,
**characterized in that** an axis of rotation of the pedal attachment (38) is in alignment with the fourth axis (D).

15. The pedal device as claimed in claim 12,
**characterized in that** the second end (35) of the second pedal lever (18) is captivated in relation to the holder (4) in such a fashion that it is swivelable by a predetermined maximum angle in relation to a defined fastening point on the holder (4).

16. The pedal device as claimed in claim 15,
**characterized in that** the second end (35) is captivated in relation to the holder (4) by means of a swivelling lever (32) or a rope.

17. The pedal device as claimed in claim 12,
**characterized in that** a stop is provided which limits a rotation of the pedal attachment (38) in relation to the second pedal lever (18).

18. The pedal device as claimed in claim 17,
**characterized in that** a spring is provided which biases the pedal attachment (38) in relation to the second pedal lever (18) towards the stop.

19. The pedal device as claimed in claim 18,
**characterized in that** the spring is integrated into the housing (36) of the generator (30) of an electronically controlled acceleration device.

## Revendications

1. Dispositif à pédale réglable pour un véhicule automobile, dans lequel une console (4) est fixée à un corps de véhicule, dans laquelle console (4) un support (3) est disposé tournant autour d'un premier axe (E), dans lequel au moins un premier levier de pédale (12) est disposé tournant sur le support (3) autour d'un deuxième axe (B) lequel (premier levier de pédale (12)) agit lors de son actionnement, par rotation autour du deuxième axe (B), sur un organe de réglage (7), par un premier point d'attaque (A), ce qui fait que le point d'attaque (A) se déplace d'une course de translation, et dans lequel un second levier de pédale (18) est monté tournant dans le support (3), **caractérisé en ce que** le second levier de pédale (18) est monté sur un prolongement (17) du support (3), de manière à pouvoir tourner autour d'un quatrième axe (D).

2. Dispositif à pédale selon la revendication 1, **caractérisé en ce que** l'organe de réglage (7) est monté dans le levier de pédale (12), de manière à pouvoir tourner par sa première extrémité (25) autour d'un troisième axe (A), et **en ce qu'**une seconde extrémité de l'organe de réglage (7) est montée pivotante sur un servofrein ou un cylindre principal.

3. Dispositif à pédale selon la revendication 1, **caractérisé en ce que** le deuxième axe (B) et le quatrième axe (D) sont disposés décalés l'un par rapport à l'autre, et **en ce que** le quatrième axe (D) est disposé au-dessous du premier axe (E) et **en ce que** le premier axe (E) est disposé au-dessous du deuxième axe (B).

4. Dispositif à pédale selon la revendication 3, **caractérisé en ce que** le premier levier de pédale (12) sert à l'actionnement d'un servofrein ou d'un cylindre principal d'un système de freinage, et **en ce que** le second levier de pédale (18) sert à la commande de la vitesse de rotation du moteur, les extrémités libres inférieures des leviers de pédale (12, 18) étant pourvues de plaques de pédale (1, 23).

5. Dispositif à pédale selon la revendication 4, **caractérisé en ce qu'**entre le premier levier de pédale (12) pour l'actionnement du frein et une tige de piston (40) sont prévus un bras oscillant (41) séparé ainsi qu'un levier pivotant (42), le bras oscillant (41) étant disposé articulé sur le levier de pédale (18) et la tige de piston (40), afin d'autoriser un plus grand degré de liberté dans la plage de réglage.

6. Dispositif à pédale selon l'une des revendications 1 à 5, **caractérisé en ce que** la console (4) est fixée à un tablier d'auvent (5) du véhicule.

7. Dispositif à pédale selon la revendication 1, **caractérisé en ce que** le prolongement (17) est pourvu en option d'un porte-à-faux (26) entourant la colonne de direction (21), ce qui fait que la colonne de direction (21) peut être disposée au choix à droite ou à gauche du dispositif à pédale.

8. Dispositif à pédale selon l'une des revendications 1 à 7, **caractérisé en ce que** le support (3) est pivoté au moyen d'un dispositif d'entraînement électrique, comme dispositif d'entraînement étant prévu de préférence un moteur électrique équipé d'une transmission, lequel est ancré tournant sur la console (4).

9. Dispositif à pédale selon la revendication 1, **caractérisé en ce que** le premier axe (E) se situe au point d'intersection des verticales médianes de deux parcours, le premier parcours étant défini par la translation du deuxième axe (B) pendant le réglage et le second parcours par la translation du quatrième axe (D) pendant le réglage.

10. Dispositif à pédale selon la revendication 1, **caractérisé en ce que** dans le support (3) est monté en outre tournant un levier de pédale d'un dispositif d'embrayage.

11. Dispositif à pédale selon la revendication 4, **caractérisé en ce qu'**une seconde extrémité (35) du second levier de pédale (18) agit sur un câble des gaz (20) pour la commande de la vitesse de rotation du moteur.

12. Dispositif à pédale selon une ou plusieurs des revendications 1 à 11 précédentes, le premier levier de pédale (12) servant à l'actionnement de l'amplificateur ou du cylindre principal d'un système de freinage, et le second levier de pédale (18) servant à la commande de la vitesse de rotation du moteur, et les extrémités libres inférieures des leviers de pédale (12, 18) étant pourvues de plaques de pédale (1, 23), **caractérisé en ce qu'**une seconde extrémité (35) libre du second levier de pédale (18) est attachée par rapport à la console (4), **en ce que** le second levier de pédale (18) est pourvu d'un appendice de pédale inférieur (38) qui est articulé tournant sur le second levier de pédale (18) pour la commande de la vitesse de rotation du moteur, le point d'appui (22) étant disposé dans la zone comprise entre le quatrième axe (D) et la plaque de pédale (23) de la pédale d'accélérateur, et un capteur de valeurs de mesure agissant entre l'appendice de pédale inférieur (38) et le second levier de pédale (18) pour détecter un mouvement de pivotement.

13. Dispositif à pédale selon la revendication 12, **caractérisé en ce que** le capteur de valeurs de mesure est réalisé sous la forme d'un transmetteur pour pédale d'accélérateur électronique (30) qui est disposé d'une part par un boîtier (36) de manière fixe sur le second levier de pédale (18), et un organe de réglage déplaçable du transmetteur pour pédale d'accélérateur électronique (30) agissant sur l'appendice de pédale inférieur (38), ou inversement.

14. Dispositif à pédale selon la revendication 12, **caractérisé en ce qu'**un axe de rotation de l'appendice de pédale (38) est aligné avec le quatrième axe (D).

15. Dispositif à pédale selon la revendication 12, **caractérisé en ce que** la seconde extrémité (35) du second levier de pédale (18) est attachée par rapport à la console (4) de manière qu'il puisse pivoter d'un angle maximal prédéfini, par rapport à un point de fixation déterminé sur la console (4).

16. Dispositif à pédale selon la revendication 15, **caractérisé en ce que** la seconde extrémité (35) est attachée par rapport à la console (4) au moyen d'un levier pivotant (32) ou d'un câble.

17. Dispositif à pédale selon la revendication 12, **caractérisé en ce qu'**il est prévu une butée qui limite un mouvement de rotation de l'appendice de pédale (38) par rapport au second levier de pédale (18).

18. Dispositif à pédale selon la revendication 17, **caractérisé en ce qu'**il est prévu un ressort qui précontraint l'appendice de pédale (38) par rapport au second levier de pédale (18) en direction de la butée.

19. Dispositif à pédale selon la revendication 18, **caractérisé en ce que** le ressort est intégré dans le boîtier (36) du transmetteur pour pédale d'accélérateur électronique (30).
